Europäisches Patentamt

(19) European Patent Office

Office européen des brevets

(11) EP 0 937 964 A1

(12) EUROPEAN PATENT APPLICATION
published in accordance with Art. 158(3) EPC

(43) Date of publication:
25.08.1999 Bulletin 1999/34

(51) Int. Cl.⁶: **G01D 5/245**

(21) Application number: 98924596.4

(86) International application number:
PCT/JP98/02597

(22) Date of filing: 12.06.1998

(87) International publication number:
WO 98/57129 (17.12.1998 Gazette 1998/50)

(84) Designated Contracting States:
GB

(30) Priority: 12.06.1997 JP 16961497

(71) Applicant: FANUC LTD
Minamitsuru-gun, Yamanashi 401-0597 (JP)

(72) Inventors:
• SAWADA, Kiyoshi
Suntou-gun Shizuoka 411-0904 (JP)
• ODAKA, Shunichi,
Fanuc Dai3virakaramatsu
Yamanashi 401-0511 (JP)
• HIRAI, Toshio,
Room 8-307, Fanuc Manshonharimomi
Yamanashi 401-0511 (JP)

(74) Representative:
Billington, Lawrence Emlyn et al
Haseltine Lake & Co.,
Imperial House,
15-19 Kingsway
London WC2B 6UD (GB)

(54) **METHOD OF FABRICATING GRADUATED PLATE**

(57) The whole circumference of a disc is divided counterclockwise into the first section B1, the second section B2, ...... and the N1(-)th section BN, and firstly a predetermined number of division lines are formed in succession on the first section B1. Then, a predetermined number of division lines are formed in succession secondly in the N(-)th section BN, thirdly on the second section B2 and fourth on the N - 1(-)th section BN - 1 in this order. In this manner, the division lines are formed on the whole circumference of the disc. As a result, when one of two adjacent division lines belongs to the N(-)th section, and the other belongs to the N - 1(-)th section BN - 1, a difference in machining time between the division lines in the adjacent sections becomes substantially equal to a time required for machining for the number of division lines for three sections, and a reduction of time is attained, so that a drift error caused in proportion to the elapsed time does not occur exclusively in a specific location.

Fig.3

## Description

TECHENICAL FIELD

This invention relates to a method of machining a scale plate such as a code plate of an encoder by forming a plurality of division lines at predetermined intervals over the whole circumference of a disc.

BACKGROUND ART

A rotary encoder is used to detect an angular position, an angular velocity or the like of a rotary axis. A large number of code elements (that is, division lines) are formed in radial arrangement at predetermined angular intervals over the whole circumference of a code plate of the rotary encoder. Further, a scale plate having a large number of division lines in radial arrangement at predetermined angular intervals over the whole circumference is also available for gauges other than the rotary encoder.

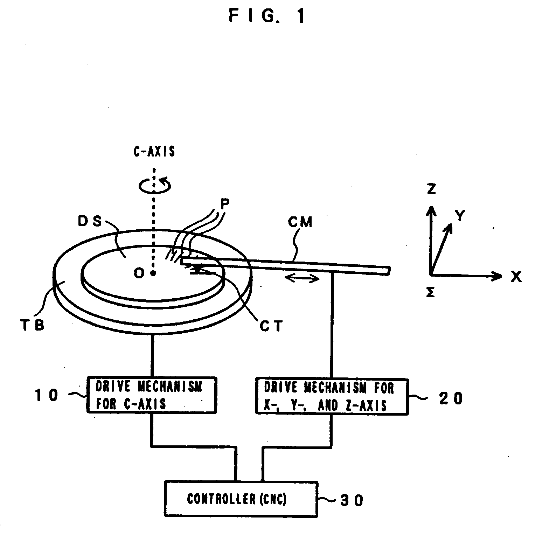

Fig. 1 shows a system to form the division lines on the scale plate such as the code plate of the rotary encoder.

A disc DS forming a code plate is positioned on a work table TB turned by a drive mechanism 10 for C-axis such that a center position O of the disc DS is in alignment with a C-axis. For the purpose of forming a large number of division lines P on the disc DS, a cutting mechanism CM is provided close to the work table TB. A cutting tool CT suitable to form the division lines P is mounted to a cutting head of the cutting mechanism CM. For instance, a mechanical cutting tool, a laser beam or the like is available for the cutting tool CT. The cutting mechanism CM is translated by a drive mechanism 20 for X-, Y- and Z-axes.

The drive mechanism 10 for C-axis and the drive mechanism 20 for X-, Y- and Z-axes are connected to a controller (CNC) 30. The controller (CNC) 30 controls the C-axis and each of X-, Y- and Z-axes according to a taught machining program and executes the formation of each division line P in sequence. When the direction of each of the X-, Y- and Z-axes in a coordinate system $\Sigma$ is set as shown in Fig. 1, a fundamental mode of operation is as follows.

Incidentally, the coordinate system $\Sigma$ is set in advance such that the C-axis is parallel to the Z-axis and the X-, Y- and Z-positions showing the center position 0 of the disc DS are represented by (X0, 0, 0). In the illustrated arrangement, it is found that X0< 0. Moreover, the position of the cutting tool CT is represented in terms of the position of a machining point.

1. Place the cutting tool CT at a standby position (X1, 0, Z0). In the illustrated instance, it is found that X0 < X1 < 0 and Z0 > 0.

2. Move the cutting tool CT from the standby position (X1, 0, Z0), to a machining start tool position (X1, 0, 0), and subsequently perform machining for a single division line P. The details of a motion of the cutting tool CT in the course of machining are based on the teaching contents or the like in the machining program. Incidentally, the C-axis position at the time to start machining for the first division line P is set to be equal to that at the time to end machining for the last division line P in this case.

3. Return the cutting tool CT to a standby position (Xi, 0, Z0) after machining for a (the i(-)th) division line Pi is ended.

4. Determine the position of the C-axis by turning the C-axis by an angle $\Delta\theta i$. In this case, the angle $\Delta\theta i$ represents an amount equivalent to an angular interval between the i(-)th division line Pi and the i + 1(-)th division line Pi+1 and is taught in advance according to a target arrangement pattern of division lines. For instance, in case of forming M pieces of division lines P1, P2, ...... PM at equiangular intervals $\Delta\theta$ = 360° /M over the whole circumference 360°, the angle $\Delta\theta 1$ is represented as follows:

$$\Delta\theta 1 = \Delta\theta 2 = \cdot \cdot \cdot \cdot \cdot \cdot = \Delta\theta M \qquad\qquad (1)$$
$$= 360° /M$$

However, it is to be noted in this case that $\Delta\theta M$ represents an angular interval between the last (M(-)th) division line PM and the first division line P1 measured from the last division line PM.

5. In the following process, the above steps 2 to 4 are repeatedly performed until machining for the M(-)th (last) division line PM is ended, and as a result, the arrangement of division lines is formed as shown in Fig. 2A, for instance.

In the instance shown in Fig. 2A, M pieces of division lines P1 to PM are formed according to a design value of each equiangular interval $\Delta\theta$. The division lines are formed in the order of P1, P2, P3, ...... PM - 1 and PM. Otherwise, the division lines may be formed in the order of PM, PM - 1, PM - 2, ...... P3, P2 and P1. Incidentally, although 120 pieces of division lines (i.e., M = 120) in total are shown in Fig. 2A merely as numerical values for convenience of illustration, the actual total number of division lines is not limited to this value, and tens of thousands of division lines may be formed in some cases.

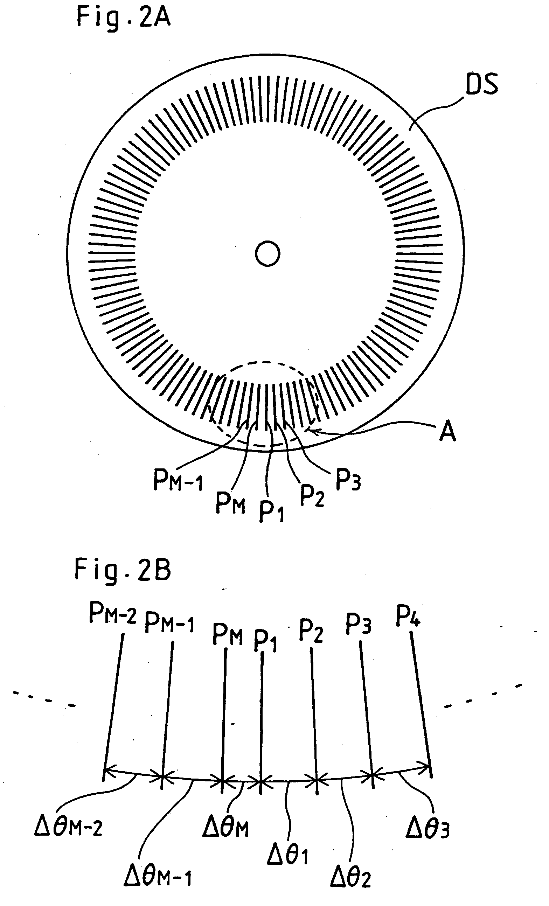

The problem in the above prior art is that each angular interval $\Delta\theta i$ between the actually-formed adjacent division lines of a code plate is not strictly coincident with a design value ($\Delta\theta$) due to various errors in actual machining. As shown in Fig. 2, in case of forming M pieces of division lines in total at the designed angular intervals $\Delta\theta( = 360° /M)$ , for instance, an error of the angular interval between the division lines Pi and Pi + 1 may be estimated as follows. A collection of various premised amounts in this case will now be summarized in the following.

M: the total number of division lines

T: a time required for forming (machining) a single division line, assuming that this value T is applied to formation of every division lines.

$\theta i$: an angular position of the i(-)th division line Pi

$\Delta\theta i$: an angular interval between the division line Pi and its adjacent division line Pi + 1, that is; $\Delta\theta i = \theta i + 1 - \theta i (\Delta\theta i > 0)$

$\Delta\theta$ : a common design value of each angular interval between the adjacent division lines

$$(\Delta\theta = 360° /M)$$

Ei: an error of each angular interval between the adjacent division lines (the division line Pi and its adjacent division line Pi + 1) on the condition that Ei is defined by Ei = $|\Delta\theta i - \Delta\theta|$ (Ei $\cong$ 0).

Here, the error of the angular position $\theta i$ of the division line Pi may be classified into a random error occurring in machining for the individual division lines and a drift error (a time-based cumulative drift error) having a tendency to increase cumulatively with the lapse of time. In this case, the random error occurring in machining for the division line Pi is represented by Fi, and the drift error is defined as an error increasing cumulatively in proportion to the elapsed time in units of drift D per unit time.

Then, the angular position $\theta i$ of the division line Pi may be represented by the following expression (2).

$$\theta i = \Delta\theta \times (i - 1) + Fi + \{D \times T \times (i\text{-}1)\} \tag{2}$$

The following expression (3) is found from the above expression (2).

$$\Delta\theta i = \theta i + 1 - \theta i = \Delta\theta + Fi + 1 - Fi + D \times T \text{ (wherein i = 1, 2 ...... M - 1)} \tag{3}$$

Further, the following expression (4) is given:

$$\Delta\theta M = \theta 1 - \theta M \\ = \Delta\theta + F1 - FM + D \times T \times (M\text{-}1) \tag{4}$$

Accordingly, the angular interval error Ei is represented by the following expression (5) when i < M, or by the following expression (6) when i = M.

$$Ei = |\Delta\theta i - \Delta\theta| = |F1 - Fi + D \times T| \text{ (wherein i = 1, 2, ...... M-1)} \tag{5}$$

$$EM = |\Delta\theta M - \Delta\theta| \\ = |F1 - FM + D \times T \times (M\text{-}1)| \tag{6}$$

As the result of comparison between the expression (5) and the expression (6), it is found that the drift error depending on the value of M occurs only between the first division line P1 and its adjacent last division line PM. A description will now be given of the above fact with reference to Fig. 2B which shows a portion A of Fig. 2A in an enlarged scale. According to the state shown in Fig. 2B, the angular interval $\Delta\theta M$ between the M(-)th division line PM and the first division line P1 is largely different from each of the angular intervals $\Delta\theta M - 2$, $\Delta\theta M - 1$, $\Delta\theta 1$, $\Delta\theta 2$, $\Delta\theta 3$, ...... between the other adjacent division lines. Fig. 2B shows a case where the angular interval between PM and P1 becomes insufficient since the drift is increased cumulatively due to a tendency to leave the angular interval wider than the design value. On the contrary, in a case where the drift is increased cumulatively due to a tendency to leave the angular interval narrower than the design value, the angular interval between PM and P1 becomes wider to excess.

As has been described, according to a method of forming M-pieces of division lines on the scale plate so as to take a round in the manner of forming the division line P1 first and then forming other division lines in the order of P2, P3, ......, PM - 1 and PM clockwise as shown in Figs. 2A and 2B, since time interval between the time when forming the first division line P1 and the time when forming the last division line PM next to the division line P1 becomes wider, a large drift error (depending on a value of M) occurs exclusively between the machined division lines P1 and PM. As a matter of course, the same may be said of a case where the M-pieces of division lines are formed on the scale plate so as to take a round in the manner of forming the division line PM first and then forming other division lines in the order of PM - 1, PM - 2, ......, P3, P2 and P1 clockwise.

It is supposed that the drift error as described above occurs due to various factors such as a temperature change of machining environment, a temperature change of a machine tool, a wear of a tool, a humidity change and atmospheric change. However, it is very difficult to remove the above factors completely.

## DISCLOSURE OF THE INVENTION

It is an object of the present invention to provide a method of machining a scale plate, which insures that a drift error caused in proportion to a difference in time taken for forming each division line may not occur exclusively between the specific adjacent division lines, in case of forming the division lines over the whole circumference of the scale plate such as a code plate of an encoder.

For attaining the above object, a method of machining a scale plate as one aspect according to the present invention comprises the steps of dividing the whole circumference of a disc into at least four sections, firstly forming a predetermined number of division lines in succession in any one of the sections; secondly forming a predetermined number of division lines in succession in the section adjacent to or other than the above section; and finally forming a predetermined number of division lines in succession in the section other than both the sections adjacent to the firstly-machined section, resulting in formation of a predetermined number of division lines at predetermined intervals over the whole circumference of the disc.

A method of machining a scale plate as another aspect according to the present invention comprises the steps of dividing the whole circumference of a disc into at least four sections such as the first, the second, the third, ...... and the N(-)th sections according to clockwise or counterclockwise direction; firstly-forming a predetermined number of division lines in succession in the first section; and secondly forming a predetermined number of division lines in succession in the order of the N(-)th section, the second section, the N-1(-)th section and the third section, resulting in formation of a predetermined number of division lines over the whole circumference of the disc.

According to the present invention, in a case of machining a scale plate such as a code plate of a rotary encoder, it is possible to avoid increasing remarkably a difference in machining time between any adjacent division lines, it is possible to prevent a phenomenon that a drift error caused in proportion to the elapsed time occurs exclusively between any specific division lines, and as a result, a scale plate free from any local defective in machining may be formed.

## BRIEF DESCRIPTION OF THE DRAWINGS

Fig. 1 is a view schematically showing a machining system to form division lines on a scale plate over the whole circumference;

Fig. 2A is a view showing a scale plate provided with division lines over the whole circumference;

Fig. 2B is an enlarged view showing a portion (A) of the scale plate shown in Fig. 2A;

Fig. 3 is a view for explaining an embodiment 1 of a method of machining a scale plate according to the present invention;

Fig. 4 is a view for explaining an embodiment 2 of a method of machining a scale plate according to the present invention; and

Fig. 5 is a view for explaining an embodiment 3 of a method of machining a scale plate according to the present invention.

## BEST MODE FOR CARRYING OUT THE INVENTION

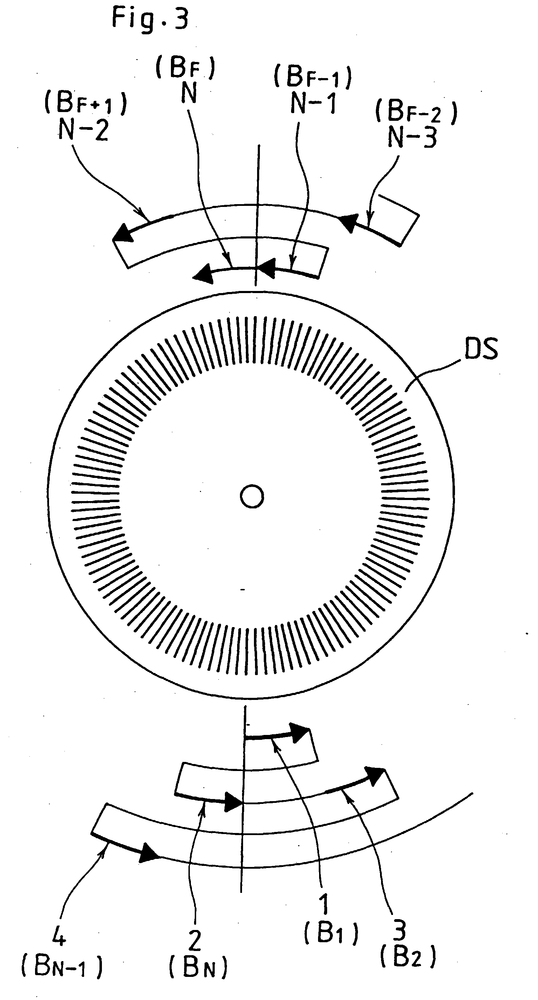

A method of machining a scale plate according to the present invention is described below with reference to Figs. 3 to 5. The same machining system as that shown in Fig. 1 is available to perform this machining method, but a machining program to control the machining system is different from that for the machining method in the prior art.

Incidentally, in the system configuration shown in Fig. 1, although the work table is turned with the C-axis, and the tool side is moved with the X-, Y- and Z-axes, the motion assignments of these axes may be replaced with each other properly as is generally known. For instance, the work table may be driven with the X-, Y- and Z-axes, and the tool side may be turned around the table with the C-axis. Otherwise, one of the work table side and the tool side may be fixed, and the C-axis and the X-, Y- and Z-axes may be assigned to both turning and translation of the other.

(Embodiment 1)

A description will now be given of an embodiment 1 according to the present invention with reference to a schematic view of Fig. 3.

The whole circumference of a disc is divided into N pieces of sections clockwise or counterclockwise. The number of N is 4 or more. Fig. 3 shows a case where N pieces of sections are set counterclockwise on the disc in the order of the first section B1, the second section B2, ......, the F - 2(-)th section BF - 2, the F - 1(-)th section BF - 1, the F(-)th section, the F + 1(-)th section BF + 1, ......, the N - 1(-)th section BN - 1 and the N(-)th section BN. Each section is made equal in width (angle) to form the same number of division lines within each section.

The order of machining of division lines, expressed in section, is as follows: First, the first section B1 is machined; the second, the N(-)th section BN is machined; third, the second section B2 is machined; the fourth, the N - 1(-)th section BN - 1 is machined; ......, the N - 3(-)th, the F - 2(-)th section BF - 2 is machined; the N - 2(-)th, the F + 1(-)th section BF + 1 is machined; the N - 1(-)th, the F - 1(-)th section BF - 1 machined; and the N(-)th, i.e., the last the F(-)th section BF machined. Incidentally, numerical values from 1 to N in Fig. 3 represent the order of machining of the sections.

Machining of division lines within one section is performed in order according to the direction of arrows shown in Fig. 3. That is, as is apparent from Fig. 3, the direction of machining of division lines within one section is set counterclockwise for every section. Thus, any difference in machining conditions of division lines does not occurs in each section.

Incidentally, instead of numbering the sections counterclockwise as shown in Fig. 3, the sections may be numbered clockwise such that the first section B1 is subjected to the first machining, the N(-)th section BN is subjected to the second machining, the second section B2 is subjected to the third machining and the Ni - 1(-)th section BN - 1 is subjected to the fourth machining in the similar manner. Besides, each section is not always made equal in width, and its width may be varied so as to contain the different number of division lines.

In machining of division lines on the disc, while a cutting tool, for instance, is available for formation of the division lines, the division lines may be also formed by a laser beam, instead of a cutting tool.

When the machining method shown in Fig. 3 is employed, a difference in machining time between adjacent code elements within the same section is substantially equal to time T required for machining of a single code element.

On the other hand, when one of two adjacent division lines belongs to the first section B1, and the other belongs to the N(-)th section BN, the time elapsed from a start point of machining of one division line to an end point of machining of the other division line is equivalent to the sum of a time including a time required for forming all the division lines belonging to the first section B1 and the N(-)th section BN and a time required for tool movement between the sections.

Also, when one of two adjacent division lines belongs to the N(-)th section BN, and the other belongs to the N - 1(-)th section BN - 1, the time elapsed from a start point of machining of one division line to an end point of machining of the other division line is equivalent to the sum of a time including a time required for forming all the division lines belonging to the N(-)th section BN, the third section B3 and the N - 1(-)th section BN - 1 and also a time required for tool movement between the sections.

Further, when one of two adjacent division lines belongs to the first section B1, and the other belongs to the second section B2, the time elapsed from a start point of machining of one division line to an end point of machining of the other division line is equivalent to the sum of a time including a time required for forming all the division lines belonging to the N(-)th section BN and a time required for tool moving between the sections.

As described above, in the machining method according to the embodiment 1, a difference in machining time between any two adjacent division lines does not exceed a time required for machining of the division lines for three sections (provided that the time required for moving a tool between the sections is ignored). As a result, a considerable time-base reduction of the difference in machining time between two specific adjacent division lines is realized in the embodiment 1, in comparison with the prior art in which the above difference is equivalent to the time required for machining of all the division lines to be formed on the disc.

Now, if the number of division lines contained in one section is assumed to be m, it takes a time 3mT (provided that T represents a time required for machining for a single division line) to form all the division lines belonging to three sections. A drift error increased cumulatively within the lapse of the time 3mT is represented by $3mT \times D$ (where D represents the amount of drift per unit time). Further, a random error resulting from machining of 3m pieces of division lines is represented by a function found by raising 3m to 1/2th power, that is $F(3m)^{1/2}$. In this case, if the minimum precision between the adjacent division lines is assumed to be $\delta\theta$, it is necessary to determine the number m of machined division lines contained in one section so as to satisfy the following expression (7)

$$\delta\theta > 3mT \times D + \gamma F(3m)^{1/2} \tag{7}$$

where $\gamma$ represents a coefficient relating to the likelihood ratio in avoidance of defective machining.

(Embodiment 2)

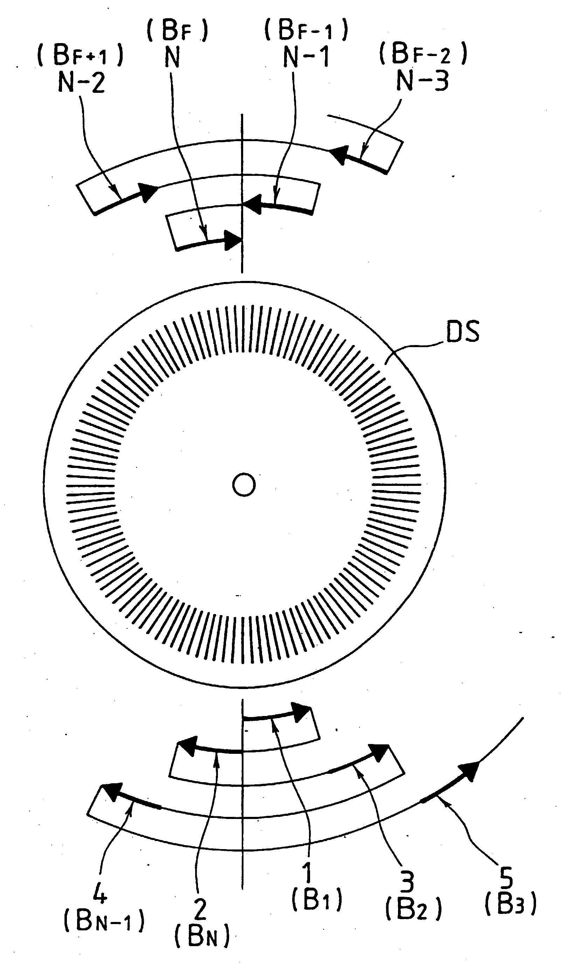

A description will now be given of an embodiment 2 according to the present invention with reference to a schematic view of Fig. 4.

The embodiment 2 is similar to the embodiment 1 (Fig. 3) in machining order in section units, however, the order of machining of division lines within one section is different from that within the other section to be machined next, while, in the case of embodiment 1, the order of machining of division lines within any section is always the same.

As shown in Fig. 4, the direction of machining of division lines in the first section B1 subjected to the first machining is counterclockwise, that of machining of division lines in the N(-)th section BN subjected to the second machining is clockwise, that of machining of division lines in the second section B2 subjected to the third machining is counterclockwise, and that of machining of division lines in the N - 1(-)th section BN - 1 subjected to the fourth machining is clockwise. That is, in Fig. 4, the division lines from the first section to the BF - 1(-)th section are machined counterclockwise, and those from the BF(-)th section to the N(-)th section BN as the last section are machined clockwise.

According to the embodiment 2, when one of two adjacent division lines belongs to the N(-)th section BN, and the other belongs to the N - 1(-)th section BN - 1, the elapsed time from a start point of machining for one division line to an end point of machining for thee other division line is equivalent to the sum of a time including a time required for forming all the division lines belonging to the N(-)th section BN and a time required for movement between the sections.

Further, when one of two adjacent division lines belongs to the first section B1, and the other belongs to the second section B2, the elapsed time from a start point of machining of one division line to an end point of machining of the other division line is equivalent to the sum of a time including a time required for forming all the division lines belonging to the N(-)th section and a time required for a tool movement between the sections.

As described above, in the machining method according to the embodiment 2, a difference in machining time between any two adjacent division lines does not exceed the time required for machining of division lines for one section (provided that the time taken for moving a tool between the sections is ignored). As a result, the embodiment 2 is less affected by a drift error, in comparison with the embodiment 1.

Thus, in the embodiment 2, if the minimum precision between the adjacent division lines is assumed to be $\delta\theta$, the number m of division lines formed within one section is determined in consideration of the following expression (8).

$$\delta\theta > mT \times D + \gamma F(m)^{1/2} \tag{8}$$

(Embodiment 3)

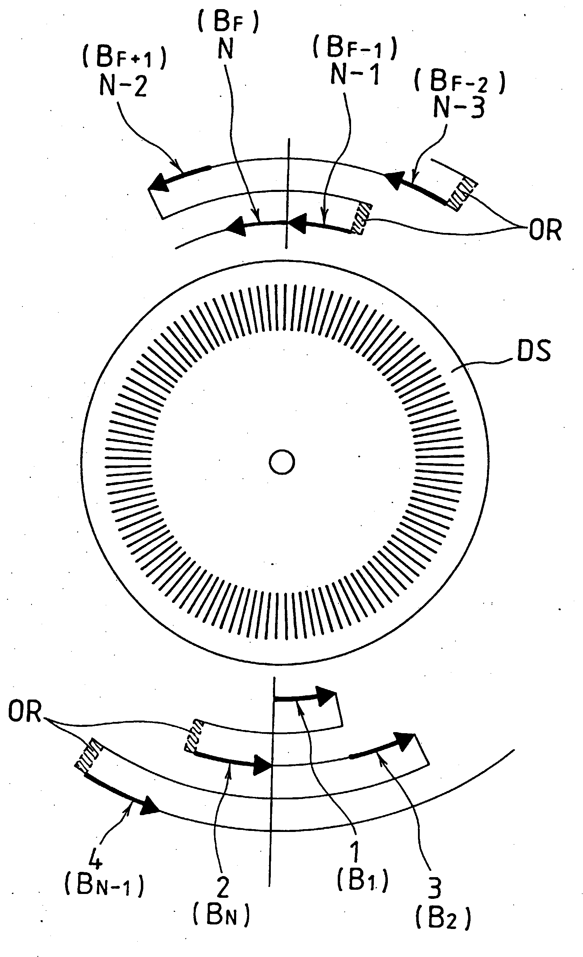

A description will now be given of an embodiment 3 according to the present invention with reference to a schematic view of Fig. 5.

The embodiment 3 is similar to the embodiment 1 (Fig. 3) in machining order in section units and in machining order in division lines within one section. However, the embodiment 3 is effective in removing any influence of backlash caused by the fact that the direction of move of a cutting tool to the N(-)th section BN subjected to the second machining, the N - 1(-)th section BN - 1 subjected to the fourth machining, ......, the F - 2(-)th section BF - 2 subjected to the N - 3(-)th machining and the F - 1(-)th section BF - 1 subjected to the N - 1(-)th machining is reversed to the machining order (counterclockwise) of the division lines within these sections. Thus, in the embodiment 3, the cutting tool is moved to next section up to a position somewhat past the first division line machining position beyond, as shown by OR in Fig. 5, and is then made to return to the first division line machining position. In this manner, the influence of backlash is prevented from occurring.

(Features common to above embodiments)

While a description has been given of the method of machining of division lines according to the three embodiments, the feature of the present invention is to provide a machining method comprising the steps of forming a plurality of division lines (for one section) in succession in one direction, and then moving the tool to also form a plurality of division lines (for one section) in succession in one direction at different positions on the scale plate. However, considerations must be made to avoid increasing a difference in machining time between the adjacent division lines resulting from the fact that the section subjected to the last machining is placed next to either of thee left and right sides of the section (the first section B1) subjected to the first machining.

Further, all the intervals between the adjacent division lines need not have the equal design value ($\Delta\theta$). For instance, when a certain angle range is represented by $\Delta\theta$, a different angle range may be represented by $2\Delta\theta$. Furthermore, all the division lines need not have the equal thickness. For instance, the regularly repetitive distribution or the like of code elements or division lines including thick and thin lines may be applied to the actual code plate or a scale plate of a gauge.

## Claims

1. A method of machining a scale plate, comprising steps of:

   dividing the whole circumference of a disc into at least four sections, and forming first a predetermined number of division lines in succession in any one of said sections;
   then forming a predetermined number of division lines in succession in a section adjacent to or other than said section; and
   finally forming a predetermined number of division lines in succession in a section other than both the sections adjacent to said section machined first, whereby a predetermined number of division lines are formed at predetermined intervals over the whole circumference of said disc.

2. A method of machining a scale plate according to claim 1, including steps of forming division lines in succession in the first section, and then forming division lines in succession in a section located at the first direction side, in terms of the clockwise or counterclockwise side, of said first section and then forming division lines in succession a section located at the second direction side, which is opposite to said first direction side, of that section, and then forming division lines in succession in a section located at the first direction side of that section.

3. A method of machining a scale plate, comprising steps of:

   dividing the whole circumference of a disc into at least four sections, i.e., the first, the second, the third, ...... and the N(-)th sections according to clockwise or counterclockwise direction, and forming first a predetermined number of division lines in succession in the first section; and
   then forming a predetermined number of division lines in succession in the order of the N(-)th section, the second section, the N - 1(-)th section and the third section, whereby a predetermined number of division lines are formed at predetermined intervals over the whole circumference of said disc.

4. A method of machining a scale plate according to claim 3, wherein the division lines in each section are formed in succession in order in either of the predetermined clockwise and counterclockwise directions.

5. A method of machining a scale plate according to claim 3, wherein when a direction of move of a division line-forming tool at the time of transfer in machining from a certain-ordered section to the next-ordered section is the reverse of a direction of successive formation of the division lines on the section to which the tool is moved, said tool is moved to a position somewhat past the first division line machining position in the destination of the tool beyond and is then made to return to the first division line machining position.

6. A method of machining a scale plate according to claim 3, wherein when machining is transferred from a certain-ordered section to the next-ordered section, the order of successive machining of division lines in said next-ordered section is the reverse of the order of successive machining of division lines in the previously-machined section.

7. A method of machining a scale plate according to claim 1 or 3, wherein said scale plate includes a code plate of a rotary encoder.

FIG. 1

Fig.2A

DS

A

P_{M-1}  P_M  P_1  P_2  P_3

Fig.2B

P_{M-2}  P_{M-1}  P_M  P_1  P_2  P_3  P_4

$\Delta\theta_{M-2}$  $\Delta\theta_M$  $\Delta\theta_3$

$\Delta\theta_{M-1}$  $\Delta\theta_1$  $\Delta\theta_2$

# Fig.3

$(B_{F+1})$
N-2

$(B_F)$
N

$(B_{F-1})$
N-1

$(B_{F-2})$
N-3

DS

4
$(B_{N-1})$

2
$(B_N)$

1
$(B_1)$

3
$(B_2)$

EP 0 937 964 A1

$(B_{F+1})$
N-2

$(B_F)$
N

$(B_{F-1})$
N-1

$(B_{F-2})$
N-3

DS

4
$(B_{N-1})$

2
$(B_N)$

1
$(B_1)$

3
$(B_2)$

5
$(B_3)$

$(B_{F+1})$ N-2

$(B_F)$ N

$(B_{F-1})$ N-1

$(B_{F-2})$ N-3

OR

DS

OR

4 $(B_{N-1})$

2 $(B_N)$

1 $(B_1)$

3 $(B_2)$

## INTERNATIONAL SEARCH REPORT

| International application No. |
|---|
| PCT/JP98/02597 |

**A. CLASSIFICATION OF SUBJECT MATTER**
Int.Cl⁶ G01D5/245

According to International Patent Classification (IPC) or to both national classification and IPC

**B. FIELDS SEARCHED**

Minimum documentation searched (classification system followed by classification symbols)
Int.Cl⁶ G01D5/245

Documentation searched other than minimum documentation to the extent that such documents are included in the fields searched
Jitsuyo Shinan Koho     1926-1996    Toroku Jitsuyo Shinan Koho    1994-1998
Kokai Jitsuyo Shinan Koho  1971-1998   Jitsuyo Shinan Toroku Koho    1996-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 62-17614, A (Inoue Japax Research Inc.), 26 January, 1987 (26. 01. 87), Full text ; all drawings (Family: none) | 1-7 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 August, 1998 (19. 08. 98) | 1 September, 1998 (01. 09. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)